(19) Europäisches Patentamt
European Patent Office
Office européen des brevets

(11) **EP 4 687 063 A1**

(12) **EUROPEAN PATENT APPLICATION**

(43) Date of publication:
**04.02.2026 Bulletin 2026/06**

(21) Application number: **25192481.7**

(22) Date of filing: **29.07.2025**

(51) International Patent Classification (IPC):
**G06F 30/27** (2020.01)    **G06F 119/08** (2020.01)

(52) Cooperative Patent Classification (CPC):
**G06F 30/27; G06F 2119/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.08.2024 KR 20240102727
23.07.2025 KR 20250100086**

(71) Applicant: **SAMSUNG SDI CO., LTD.**
**Yongin-si, Gyeonggi-do 17084 (KR)**

(72) Inventors:
• **JEONG, Areum**
**17084 Yongin-si, Gyeonggi-do (KR)**
• **LEE, Choonghoon**
**17084 Yongin-si, Gyeonggi-do (KR)**
• **KIM, Hyun**
**17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **THERMAL ANALYSIS SYSTEM AND METHOD FOR BATTERY SYSTEM**

(57)    The present disclosure relates to a thermal analysis system (1) and method for a battery system. The thermal analysis system (1) includes a learning data generation device (10) configured to generate second thermal analysis data using first thermal analysis data and a first artificial neural network model. The first thermal analysis data (x) is obtained through numerical thermal analysis of a battery system. The thermal analysis system (1) also includes a model construction device (20) configured to construct a thermal analysis model by using a second artificial neural network model with the first thermal analysis data and the second thermal analysis data as learning data.

## FIG. 4

**Description**

**BACKGROUND**

**(a) Field of the Invention**

The present disclosure relates to a thermal analysis system and method for a battery system.

**(b) Description of the Related Art**

A rechargeable (or secondary) battery is a battery that may be charged and discharged, unlike a primary battery that may not be charged. Low-capacity rechargeable batteries are used in small portable electronic devices such as smartphones, feature phones, laptop computers, digital cameras, and camcorders. Large-capacity rechargeable batteries are widely used as motor driving power and power storage devices such as in hybrid vehicles and electric vehicles. A rechargeable battery includes an electrode assembly including a positive electrode and a negative electrode, a case accommodating the electrode assembly, and an electrode terminal connected to the electrode assembly.

The temperature of the rechargeable battery is one of the important parameters related to the condition of the battery. Therefore, thermal analysis of a battery system is performed in various ways during the process of designing or evaluating the battery system. Thermal analysis of a large-capacity battery system such as an energy storage system (ESS) requires enormous time and human resources.

The above information disclosed in this background section is only for enhancement of understanding of the background of the disclosure, and therefore it may contain information that is not prior art that or otherwise already known to a person of ordinary skill in the art.

**SUMMARY**

The present disclosure is to provide a thermal analysis system and method for a battery system that may reduce the time and resources required for thermal analysis of the battery system.

However, the technical problems to be solved by the present disclosure is not limited to the above, and other objects not mentioned herein will be understood from the following description by those skilled in the art.

An embodiment of the present disclosure provides a thermal analysis system including: at least one processor configured to read out instructions stored in at least one memory to cause the thermal analysis system to function as: a learning data generation device configured to generate second thermal analysis data using first thermal analysis data and a first artificial neural network model, the first thermal analysis data having been obtained through numerical thermal analysis of a battery system, and a model construction device configured to construct a thermal analysis model by using a second artificial neural network model with the first thermal analysis data and the second thermal analysis data as learning data.

The first thermal analysis data may be obtained by numerically analyzing a temperature distribution of the battery system using a governing equation.

The model construction device may be further configured to use first analysis condition data, the first thermal analysis data, the second thermal analysis data, and the first analysis condition data as the learning data.

The thermal analysis model may be configured to output a thermal analysis result of the battery system based on input analysis condition data.

The first artificial neural network model may be a generative adversarial network generated using a generator configured to generate new thermal analysis data by transforming the first thermal analysis data and a discriminator configured to output a result of comparing the thermal analysis data generated by the generator with the first thermal analysis data.

The generator may be further configured to generate new thermal analysis data by transforming the first thermal analysis data based on an input feature vector. The generator may be further configured to repeat learning processes of adjusting the feature vector and generating new thermal analysis data based on the adjusted feature vector according to a discrimination result of the discriminator.

The feature vector may represent a temperature gradient at each node point in the battery system.

The thermal analysis system may further include a thermal analysis device configured to generate a thermal analysis of the battery system using the thermal analysis model.

Another embodiment of the present disclosure provides a thermal analysis method performed using a thermal analysis system that is configured to perform thermal analysis of a battery system, the method including: generating first thermal analysis data through numerical thermal analysis of the battery system, generating second thermal analysis data from the first thermal analysis data using a first artificial neural network model, and constructing a thermal analysis model by learning a second artificial neural network model using the first thermal analysis data and the second thermal analysis data as learning data.

The generating of the first thermal analysis data may include generating the first thermal analysis data by numerically analyzing a temperature distribution of the battery system using a governing equation.

The constructing may include using first analysis condition data, the first thermal analysis data, and the second thermal analysis data.

The thermal analysis model may be a model configured to output a thermal analysis of the battery system based on input analysis condition data. For example, in the constructing, the thermal analysis model may be a model configured to output a thermal analysis of the battery system based on input analysis condition data.

The first artificial neural network model may be a generative adversarial network, that is generated using a generator configured to generate new thermal analysis data by transforming the first thermal analysis data and a discriminator configured to output a result of comparing the thermal analysis data generated by the generator with the first thermal analysis data. For example, in the generating of the second thermal analysis data, the first artificial neural network model may be a generative adversarial network that is generated using a generator configured to generate new thermal analysis data by transforming the first thermal analysis data and a discriminator configured to output a result of comparing the thermal analysis data generated by the generator with the first thermal analysis data.

The generating of the second thermal analysis data may include transforming, using the generator, the first thermal analysis data based on an input feature vector to generate new thermal analysis data, and repeating, using the generator, learning processes of adjusting the feature vector and generating new thermal analysis data based on the adjusted feature vector according to a discrimination result of the discriminator.

The feature vector may represent a temperature gradient at each node point. For example, in the generating of the second thermal analysis data, the feature vector may represent a temperature gradient at each node point

The thermal analysis method may further include generating the thermal analysis result of the battery system using the thermal analysis model, e.g. by performing the thermal analysis using the thermal analysis method.

According to the present disclosure, time and resources required for thermal analysis of a battery system may be reduced.

However, effects obtainable through the present disclosure are not limited, and other effects not mentioned herein will be clearly understood by those skilled in the art from the following disclosure.

## BRIEF DESCRIPTION OF THE DRAWINGS

The accompanying drawings illustrate embodiments of the present disclosure and together with the foregoing disclosure, serve to provide further understanding of the technical features of the present disclosure. But the present disclosure is not limited to the embodiments depicted in the drawings.

FIG. 1 schematically illustrates a thermal analysis system for a battery system according to an embodiment.
FIG. 2 is an example of a thermal analysis image.
FIG. 3 schematically illustrates a structure of an artificial neural network model used in a data augmentation portion of a battery system according to an embodiment.
FIG. 4 schematically illustrates a thermal analysis method of a battery system according to an embodiment.

## DETAILED DESCRIPTION OF THE EMBODIMENTS

Hereinafter, embodiments of the present disclosure will be described in detail with reference to the accompanying drawings. Since the embodiments described in the specification and the configurations shown in the drawings are merely the most preferable embodiments and configurations of the present disclosure, they do not represent all of the technical ideas of the present disclosure. Various modified examples, which may replace the embodiments, are possible. It will be further understood that the terms "comprise, include," "comprising," and/or "including," when used in this specification, specify the presence of the stated features, integers, steps, operations, elements, and/or components but do not preclude the presence or addition of one or more other features, integers, steps, operations, elements, components, and/or groups thereof. The use of "can/may" in describing an embodiment of the present disclosure may include "one or more embodiments of the present disclosure."

In addition, in order to help understanding of the present disclosure, the accompanying drawings are schematic and not drawn to scale, and the dimensions of some components may be exaggerated. In addition, the same reference numerals may be assigned to the same elements in different embodiments.

When it is explained that two objects are 'identical', this means that these objects are substantially identical'. Accordingly, the substantially identical objects may include deviations considered low in the art, for example, deviations within 5 %. In addition, when it is explained that certain parameters are uniform in a predetermined region, this may mean that the parameters are uniform in terms of an average in the corresponding region.

Although the terms "first", "second", and the like are used to describe various constituent elements, these constituent elements are not limited by these terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

In addition, when an element is referred to as being "connected", "coupled" or "linked" to another element, the element can be directly connected or coupled to the other element, but it should be understood that intervening elements may be present between each element, or each element may be "connected", "coupled" or "linked" to each other through another element. When one element is referred to as being coupled (e.g., electrically coupled or connected) to another element, the one element may be directly coupled to the other element or indirectly coupled to the other element via one or more intervening elements.

Throughout the specification, unless stated otherwise, "A and/or B" refers to A, B, or A and B. In other words, the term "and/or" includes all or various combinations of a plurality of items that are related and arranged. "C to D" refers to C or greater and D or smaller, unless stated otherwise.

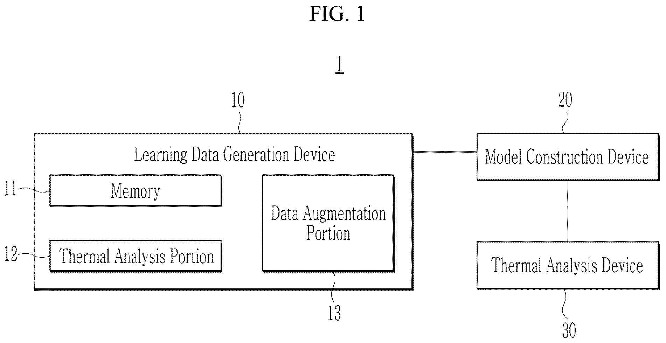

FIG. 1 schematically illustrates a thermal analysis system for a battery system according to an embodiment.

Referring to FIG. 1, a thermal analysis system 1 for a battery system according to an embodiment may include a learning data generation device 10, a model construction device 20, and a thermal analysis device 30.

The learning data generation device 10 may generate learning data to be used for constructing a thermal analysis model (described below). The learning data generation device 10 may include a memory 11, a thermal analysis portion 12, and a data augmentation portion 13.

The memory 11 may store various types of data processed by the learning data generation device 10. For example, the memory 11 may store thermal analysis data and analysis condition data generated by the learning data generation device 10.

The thermal analysis portion 12 may generate thermal analysis data by numerically analyzing the thermal distribution of battery systems. Thermal analysis refers to a numerical analysis of heat transfer phenomena in structures. The thermal analysis portion 12 divides an area that is a target of thermal analysis in each battery system (hereinafter referred to as a "thermal analysis target area") into a plurality of areas as a mesh structure and may perform thermal analysis in each area using various governing equations such as an energy conservation equation. The thermal analysis portion 12 may generate thermal analysis data based on the thermal analysis result. The thermal analysis data may include a thermal analysis image indicating a temperature distribution in a thermal analysis target area.

Equation 1 below shows an example of the governing equation used for thermal analysis in the thermal analysis portion 12.

[Equation 1]

$$\rho c_p \frac{DT}{Dt} = \frac{Dp}{Dt} + \nabla \cdot (k \nabla T) + \nabla \vec{u} \cdot \tau + S$$

Equation 1 above represents the energy conservation equation, more specifically the thermal energy equation. In Equation 1, $\rho$ represents density, Cp represents specific heat at constant pressure, DT/Dt represents the temperature change rate along the fluid particle path, Dp/Dt represents the energy change due to fluid compression or expansion, $\nabla \cdot (k \nabla T)$ represents heat conduction driven by a temperature gradient, and S represents internal heat sources/heat sinks.

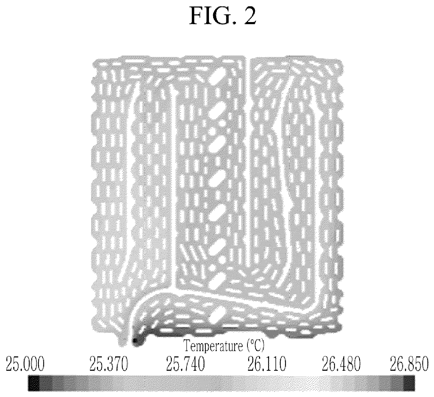

FIG. 2 is an example of a thermal analysis image. Referring to FIG. 2, the thermal analysis image may visualize the temperature distribution of a thermal analysis target area by displaying the image of each part of the area based on the temperature of the part, e.g., by color, contrast, and the like.

In order to perform the thermal analysis of the battery system, condition data (hereinafter referred to as "analysis condition data") related to the state of the battery system for which thermal analysis is to be performed, such as initial conditions and boundary conditions, is required. When thermal analysis data is generated, the thermal analysis portion 12 may map the generated thermal analysis data and the corresponding analysis condition data into learning data and store the data in the memory 11.

The data augmentation portion 13 may generate new thermal analysis data from the thermal analysis data generated by the thermal analysis portion 12 using an artificial neural network model. Hereinafter, for better understanding and ease of description, the thermal analysis data generated through numerical thermal analysis in the thermal analysis portion 12 is referred to as original thermal analysis data (corresponding to an original thermal analysis image), and the thermal analysis data generated using an artificial neural network model in the data augmentation portion 13 is referred to as new thermal analysis data (corresponding to a new thermal analysis image).

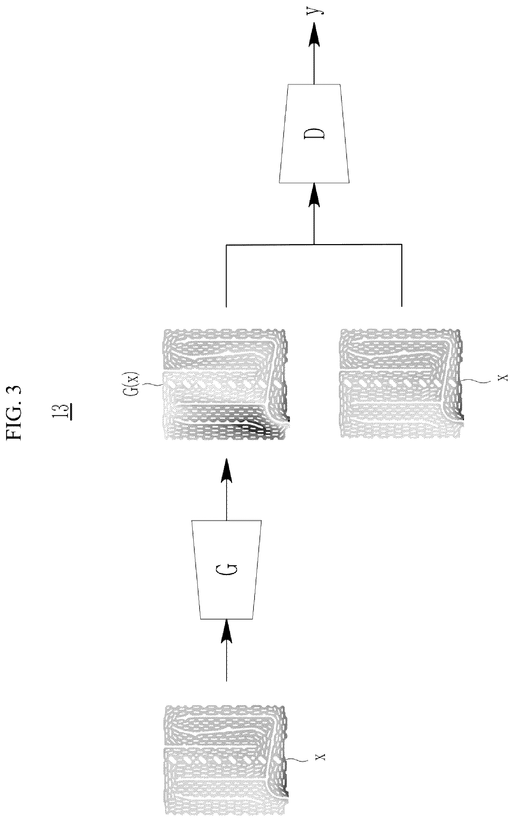

FIG. 3 schematically illustrates a structure of an artificial neural network model used in the data augmentation portion 13. Referring to FIG. 3, the data augmentation portion 13 may include a generator G and a discriminator D. The generator G and the discriminator D are deep learning models based on a generative adversarial network (GAN) and may be configured as two artificial neural networks. These two artificial neural networks are models that learn and produce results through competition with each other, and they are based on original data (original thermal analysis images) and generate new data (new thermal analysis images) based on them.

The generator G may transform an original thermal analysis image x to generate a new thermal analysis image G(x).

For example, the generator G may be configured as a Fully Connected MLP (Multi-Layer Perceptron) model consisting of an input layer, three hidden layers, and an output layer. The input layer of the generator G may receive a total 107-dimensional vector combining a 100-dimensional random noise vector and a 7-dimensional condition vector (extracted from the original thermal analysis image x or input from the user). The input 107-dimensional vector is gradually linearly transformed through the three hidden layers of the generator G (e.g., transformed from a 107-dimensional vector to a 256-dimensional vector in the first hidden layer, from a 256-dimensional vector to a 512-dimensional vector in the second hidden layer, from a 512-dimensional vector to a 1024-dimensional vector in the third hidden layer), and finally transformed and output as a 12,288-dimensional (3 channels $\times$ 64 width $\times$ 64 height) color (RGB) image (new thermal analysis image G(x)) in the output layer. In this process, a ReLU activation function may be used in each hidden layer, and a Tanh activation function may be used in the output layer.

The new thermal analysis image G(x) generated by the generator G may be passed to the discriminator D.

The discriminator D may compare the thermal analysis image G(x) generated by the generator G with the original thermal analysis image x to determine the suitability of the thermal analysis image G(x) generated by the generator G. That is, the discriminator D may determine whether the thermal analysis image G(x) generated by the generator G and the original thermal analysis image x used to generate it are distinguishable from each other and output the determined result.

For example, the discriminator D may be configured as a Fully Connected MLP model consisting of an input layer, three hidden layers, and an output layer. The input layer of the discriminator D may receive the thermal analysis image G(x) generated by the generator G (12,288-dimensional image vector) and a 7-dimensional condition vector (the condition vector used to generate the thermal analysis image G(x) in the generator G). The input 12,295-dimensional vector is gradually compressed through three hidden layers (e.g., compressed from a 12,295-dimensional vector to a 1024-dimensional vector in the first hidden layer, from a 1024-dimensional vector to a 512-dimensional vector in the second hidden layer, from a 512-dimensional vector to a 256-dimensional vector in the third hidden layer), and finally transformed and output as a single number representing the determination result (y) in the output layer. In this process, a LeakyReLU activation function may be used in each hidden layer, and a Sigmoid activation function may be used in the output layer.

The discriminator D may use a loss function to calculate a loss value that represents the difference between the thermal analysis image G(x) output from the generator G and the original thermal analysis image x. The discriminator D may determine whether the thermal analysis image G(x) generated by the generator G and the original thermal analysis image (x) are distinguishable based on the loss value. When the loss value is greater than a predetermined value, the discriminator D may transmit the calculated loss value to the generator G. The generator G may perform learning to adjust parameters or weights within the generator G based on the loss value received from the discriminator D. The generator G may then generate a new thermal analysis image G(x) using adjusted internal parameters or weights.

The generator G may also receive additional data, for example, feature vectors, that may control the thermal analysis image generation process. A feature vector may represent a temperature gradient in the three spatial directions (usually designated as x, y, and z directions) at each node point of the thermal analysis image. When additional data is input, the generator G may generate a new thermal analysis image G(x) by modifying the original thermal analysis image x based on the input additional data (i.e., by modifying the condition vector). In addition, if the loss value in the discriminator D is greater than a predetermined value, the generator G may adjust the input additional data and perform learning to generate the new thermal analysis image G(x) based on the adjusted additional data.

The learning process described above may be repeatedly performed until the new thermal analysis image G(x) generated by the generator G is close to (e.g., difficult to distinguish from) the original thermal analysis image x, that is, until the loss value is lowered to a predetermined value or less. When the loss value is lowered to a predetermined value or less, the data augmentation portion 13 may finally conclude the thermal analysis image G(x) generated by the generator G as a new thermal analysis image to be used for learning.

Referring back to FIG. 1, when a new thermal analysis image is obtained using an artificial neural network model, the data augmentation portion 13 may store the obtained new thermal analysis image in the memory 11. The data augmentation portion 13 may map the new thermal analysis image and the corresponding analysis condition data to each other as a pair of learning data and store them. The analysis condition data mapped to the new thermal analysis image may be the same data as the analysis condition data of the original thermal analysis image used to generate the new thermal analysis image.

The data augmentation portion 13 may generate new thermal analysis data by repeatedly performing the above-described process. The pair of the new thermal analysis data and the corresponding analysis condition data generated as described above may be used as learning data for the thermal analysis model (described below), together with the original thermal analysis data and the corresponding analysis condition data.

Using deep learning, the model construction device 20 may construct a thermal analysis model that can be used to perform thermal analysis of the battery system. The thermal analysis model may be an artificial neural network model that, when analysis condition data for thermal analysis of a battery system is input, predicts and outputs thermal analysis data corresponding to the input analysis condition data. The model construction device 20 may construct the thermal analysis model using the thermal analysis data and analysis condition data generated by the learning data generation device 10 as learning data.

The analysis device 30 may produce the thermal analysis results of the battery system using the thermal analysis model constructed by the model construction device 20. When the analysis condition data of the battery system that is the subject of the thermal analysis is input, the analysis device 30 may input the analysis condition data into the thermal analysis model. The thermal analysis model may then output thermal analysis data (thermal analysis image) based on the input analysis condition data. The analysis device 30 may provide the thermal analysis data output from the thermal analysis model as a thermal analysis result for the battery system to the user.

The learning data generation device 10, the model construction device 20, and the thermal analysis device 30 may each include at least one processor for performing the functions described above. The processor may refer to a data processing device having a physically structured circuit to perform a function expressed by code or instructions included in a program that is stored in a memory, such as a microprocessor, a central processing unit (CPU), a processor core, a multiprocessor, an application-specific integrated circuit (ASIC), a field programmable gate array (FPGA), and the like.

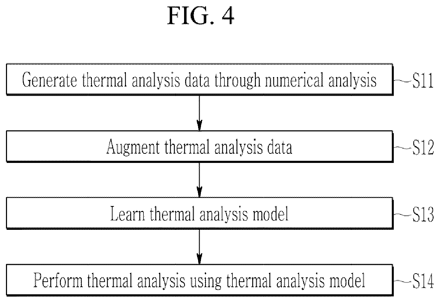

FIG. 4 schematically illustrates a thermal analysis method of a battery system according to an embodiment. The thermal analysis method of FIG. 4 may be performed by the thermal analysis system 1 described with reference to FIG. 1 to FIG. 3.

Referring to FIG. 4, the learning data generation device 10 of the thermal analysis system 1 according to the embodiment may numerically analyze the thermal distribution of a battery system to generate thermal analysis data (S11). When analysis condition data for thermal analysis, such as initial conditions and boundary conditions, are input, the learning data generation device 10 may numerically analyze the heat transfer phenomenon for each area of the battery system using a governing equation. Then, the learning data generation device 10 may generate thermal analysis data including a thermal analysis image based on the analysis result.

When the thermal analysis data is generated in step S11, the learning data generation device 10 may augment the thermal analysis data using an artificial neural network model (S12). In particular, the learning data generation device 10 may use a GAN-based artificial neural network model to augment the thermal analysis data. The generator G of the GAN may generate a new thermal analysis image by transforming the input original thermal analysis image, and the discriminator D of the GAN may use a loss function to calculate a loss value that represents the difference between the thermal analysis image output from the generator G and the original thermal analysis image. The generator G may perform learning by repeating the processes of adjusting the parameters or weights within the generator G and generating a new thermal analysis image according to the adjusted internal parameters or weights until the loss value calculated from the discriminator D is lower than a predetermined value. The learning data generation device 10 may finally determine the thermal analysis image generated by the generator G as a new thermal analysis image to be used for learning when the loss value calculated by the discriminator D is less than a predetermined value.

The generator G may also receive feature vectors that may control the thermal analysis image generation process. In this case, the generator G may generate a new thermal analysis image by transforming the original thermal analysis image based on the input feature vectors. In addition, if the loss value in the discriminator D is greater than a predetermined value, the generator G may perform learning by repeating the process of adjusting the input feature vectors and generating a thermal analysis image based on the adjusted feature vectors.

The model construction device 20 of the thermal analysis system 1 may construct a deep learning-based thermal analysis model (S13). The model construction device 20 may construct a thermal analysis model by using an artificial neural network model that is constructed using the thermal analysis data generated by the learning data generation device 10 in step S11 and step S12 and the corresponding analysis condition data as learning data.

The thermal analysis device 30 of the thermal analysis system 1 may perform thermal analysis of the battery system using the thermal analysis model constructed by the model construction device 20 (S14). When the analysis condition data for the thermal analysis of the battery system is input, the thermal analysis device 30 may input the input analysis condition data to the thermal analysis model. Then the thermal analysis device 30 may output the thermal analysis data predicted and output from the thermal analysis model based on the thermal analysis.

The thermal analysis data of the thermal analysis system (1) may be utilized in manufacturing the battery system for purposes such as component layout, cooling structure design, protection circuit setting adjustments, and material selection. For example, based on the thermal analysis data, the cooling structure may be designed to place a cooling channel in a region where high temperatures are generated. Furthermore, the arrangement of battery cells, protection circuits, temperature sensors, and other components within the battery system may also be determined based on the thermal analysis data.

As described above, the thermal analysis system 1 according to the embodiment performs thermal analysis of the battery system using an artificial neural network model rather than a numerical analysis method that requires enormous time and resources. Accordingly, the time and resources required for the thermal analysis of the battery system may be reduced. In addition, the thermal analysis system 1 may also save the time and resources required to generate the learning data by augmenting the learning data to be used for learning the thermal analysis model using GAN.

While this disclosure has been described in connection with what is presently considered to be practical embodiments, it is to be understood that the disclosure is not limited to the disclosed embodiments. Rather, the disclosure covers various modifications arrangements.

**<Description of symbols>**

1: battery system
10: learning data generation device
11: memory
12: thermal analysis portion
13: data augmentation portion
20: model construction device
30: thermal analysis device
G: generator
D: discriminator
G(x): new thermal analysis image
S11: generate first thermal analysis data through numerical thermal analysis of the battery system
S12: augment the thermal analysis data using an artificial neural network model
S13: construct a deep learning-based thermal analysis model
S14: perform thermal analysis of the battery system using the thermal analysis model constructed by the model construction device
x: original thermal analysis image

**Claims**

1. A thermal analysis system (1) comprising:
   at least one processor configured to read out instructions stored in at least one memory (11) to cause the thermal analysis system (1) to function as:

   a learning data generation device (10) configured to generate second thermal analysis data (G(x)) using first thermal analysis data (x) and a first artificial neural network model, the first thermal analysis data(x) having been obtained through numerical thermal analysis of a battery system,
   a model construction device (20) configured to construct a thermal analysis model by using a second artificial neural network model with the first thermal analysis data (x) and the second thermal analysis data (G(x)) as learning data, and
   a thermal analysis device (30) configured to generate a thermal analysis of the battery system using the thermal analysis model.

2. The thermal analysis system (1) as claimed in claim 1, wherein the first thermal analysis data (x) is obtained by numerically analyzing a temperature distribution of the battery system using a governing equation.

3. The thermal analysis system (1) as claimed in claim 2, wherein the model construction device (20) is further configured to use first analysis condition data, the first thermal analysis data (x) and the second thermal analysis data (G(x)) as the learning data.

4. The thermal analysis system (1) as claimed in claim 3, wherein the thermal analysis model is configured to output a thermal analysis result of the battery system based on input analysis condition data

5. The thermal analysis system (1) as claimed in claim 3 or 4, wherein the first artificial neural network model is a generative adversarial network generated using:

a generator (G) configured to generate new thermal analysis data (G(x)) by transforming the first thermal analysis data (x); and

a discriminator (D) configured to output a result of comparing the thermal analysis data generated by the generator (G) with the first thermal analysis data (x).

6. The thermal analysis system (1) as claimed in claim 5, wherein the generator (G) is further configured to:

generate new thermal analysis data (G(x)) by transforming the first thermal analysis data (x) based on an input feature vector; and

repeat learning processes of adjusting the feature vector and generating new thermal analysis data (G(x)) based on the adjusted feature vector according to a discrimination result of the discriminator.

7. The thermal analysis system (1) as claimed in claim 6, wherein the feature vector represents a temperature gradient at each node point in the battery system.

8. A method performed using a thermal analysis system (1) that is configured to perform thermal analysis of a battery system, the method comprising:

generating (S11) first thermal analysis data (x) through numerical thermal analysis of the battery system,

generating second thermal analysis data (G(x)) from the first thermal analysis data (x) using a first artificial neural network model,

constructing a thermal analysis model by learning a second artificial neural network model using the first thermal analysis data (x) and the second thermal analysis data (G(x)) as learning data, and

performing (S14) the thermal analysis of the battery system using the thermal analysis model.

9. The method as claimed in claim 8, wherein the generating of the first thermal analysis data (x) includes numerically analyzing a temperature distribution of the battery system using a governing equation.

10. The method as claimed in claim 9, wherein the constructing includes using first analysis condition data, the first thermal analysis data (x), and the second thermal analysis data (G(x)).

11. The method as claimed in claim 10, wherein the thermal analysis model is configured to output a thermal analysis of the battery system based on input analysis condition data.

12. The method as claimed in claim 10 or 11, wherein the first artificial neural network model is a generative adversarial network that is generated using:

a generator (G) configured to generate new thermal analysis data (G(x)) by transforming the first thermal analysis data (x); and

a discriminator (D) configured to output a result of comparing the new thermal analysis data (G(x)) generated by the generator (G) with the first thermal analysis data (x).

13. The method as claimed in claim 12, wherein the generating of the second thermal analysis data (G(x)) includes:

transforming, using the generator (G), the first thermal analysis data (x) based on an input feature vector to generate new thermal analysis data (G(x)), and

repeating, using the generator (G), learning processes of adjusting the feature vector and generating new thermal analysis data based on the adjusted feature vector according to a discrimination result of the discriminator.

14. The method as claimed in claim 13, wherein the feature vector represents a temperature gradient at each node point in the battery system.

EP 4 687 063 A1

FIG. 1

FIG. 2

Temperature (°C)

25.000          25.370          25.740          26.110          26.480          26.850

FIG. 3

<u>13</u>

# FIG. 4

| | |
|---|---|
| Generate thermal analysis data through numerical analysis | ~S11 |

↓

| | |
|---|---|
| Augment thermal analysis data | ~S12 |

↓

| | |
|---|---|
| Learn thermal analysis model | ~S13 |

↓

| | |
|---|---|
| Perform thermal analysis using thermal analysis model | ~S14 |

Europäisches
Patentamt

European
Patent Office

Office européen
des brevets

# EUROPEAN SEARCH REPORT

**Application Number**

EP 25 19 2481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU FENGSHUO ET AL: "CWGAN-GP with residual network model for lithium-ion battery thermal image data expansion with quantitative metrics", ENERGY AND AI, vol. 16, 20 November 2023 (2023-11-20), pages 1-10, XP093341049, ISSN: 2666-5468, DOI: 10.1016/j.egyai.2023.100321 * abstract * * page 2 - page 10 * ----- | 1-14 | INV. G06F30/27 ADD. G06F119/08 |
| X | HU FENGSHUO ET AL: "WGAN-GP with Residual Network Model for Lithium Battery Thermal Image Data Expansion with Quantitative Metrics", 2023 IEEE 6TH INTERNATIONAL ELECTRICAL AND ENERGY CONFERENCE (CIEEC), IEEE, 12 May 2023 (2023-05-12), pages 4030-4035, XP034374283, DOI: 10.1109/CIEEC58067.2023.10166002 [retrieved on 2023-07-10] * abstract * * page 4031 - page 4035 * ----- | 1-14 | |
| X | CN 116 930 769 A (MARKETING SERVICE CENTER OF STATE GRID SHANDONG ELECTRIC POWER COMPANY) 24 October 2023 (2023-10-24) * paragraph [0001] * * paragraph [0008] - paragraph [0022] * * paragraph [0029] - paragraph [0047] * * figures 1,2 * ----- -/-- | 1-14 | |

**TECHNICAL FIELDS SEARCHED (IPC)**

G06F

The present search report has been drawn up for all claims

| Place of search | Date of completion of the search | Examiner |
|---|---|---|
| Munich | 28 November 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EUROPEAN SEARCH REPORT**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAAZ FALAK ET AL: "A generative adversarial network-based synthetic data augmentation technique for battery condition evaluation", INTERNATIONAL JOURNAL OF ENERGY RESEARCH, vol. 45, no. 13, 14 July 2021 (2021-07-14), pages 19120-19135, XP093070161, GB ISSN: 0363-907X, DOI: 10.1002/er.7013 Retrieved from the Internet: URL:https://onlinelibrary.wiley.com/doi/full-xml/10.1002/er.7013> * the whole document * ----- | 1-14 | |
| A | JIN WENTIAN ET AL: "Full-Chip Thermal Map Estimation for Commercial Multi-Core CPUs with Generative Adversarial Learning**This work is supported in part by NSF grants under No. CCF-1816361, in part by NSF grant under No. CCF-2007135 and No. OISE-1854276", 2020 IEEE/ACM INTERNATIONAL CONFERENCE ON COMPUTER AIDED DESIGN (ICCAD), ASSOCIATION ON COMPUTER MACHINERY, 2 November 2020 (2020-11-02), pages 1-9, XP033898017, [retrieved on 2020-11-10] * the whole document * ----- | 1-14 | TECHNICAL FIELDS SEARCHED (IPC) |

The present search report has been drawn up for all claims

| Place of search | Date of completion of the search | Examiner |
|---|---|---|
| Munich | 28 November 2025 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                         
& : member of the same patent family, corresponding document

EPO FORM 1503 03.82 (P04C01)

**page 2 of 2**

## ANNEX TO THE EUROPEAN SEARCH REPORT
## ON EUROPEAN PATENT APPLICATION NO.

**EP 25 19 2481**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-11-2025**

| Patent document cited in search report | Publication date | Patent family member(s) | Publication date |
|---|---|---|---|
| CN 116930769 A | 24-10-2023 | NONE | |

EPO FORM P0459

For more details about this annex : see Official Journal of the European Patent Office, No. 12/82